# EUROPÄISCHE PATENTSCHRIFT

(11) **EP 0 776 065 B1**
(45) Veröffentlichungstag und Bekanntmachung des Hinweises auf die Patenterteilung: **05.01.2000**
(21) Anmeldenummer: 96115610.6
(22) Anmeldetag: 28.09.1996
(51) Int. Cl.: H01R 9/05, G01D 11/24

(54) **Winkelmesseinrichtung**
Angle measuring device
Dispositif de mesure d'angles

(30) Priorität: 21.11.1995 DE 19543372
(43) Veröffentlichungstag der Anmeldung: 28.05.1997
(73) Patentinhaber: Dr. Johannes Heidenhain GmbH, 83292 Traunreut (DE)
(72) Erfinder: Mitterreiter, Johann, Dipl.-Ing., 83342 Tacherting (DE)

(56) Entgegenhaltungen:
- EP-A- 0 653 811
- DE-A- 3 446 911
- DE-A- 4 304 032

## Beschreibung

Die Erfindung betrifft eine Winkelmeßeinrichtung gemäß dem Oberbegriff des Anspruches 1.

Derartige Winkelmeßeinrichtungen dienen zur Messung von Drehbewegungen einer Welle über eine oder mehrere Umdrehungen. Die Drehbewegung wird dabei inkremental oder absolut erfaßt, der ausgegebene Meßwert ist abhängig davon eine Folge von Zählimpulsen, ein Zählerwert oder ein Codewert. In Verbindung mit Zahnstangen oder Gewindespindeln lassen sich mit derartigen Winkelmeßeinrichtungen auch lineare Bewegungen messen.

Über Anschlußkabel werden der Winkelmeßeinrichtung eine Betriebsspannung zugeführt und die Meßsignale abgenommen und an eine Folgeelektronik weitergeleitet. Hierzu sind bei bekannten Winkelmeßeinrichtungen am Gehäuse axial oder radial nach außen weisende Stecker vorgesehen. Derartige am Gehäuse fest montierte Stecker erhöhen die Baugröße der Winkelmeßeinrichtung erheblich. Aus diesem Grund wurde gemäß der DE-U-84 18 488 versucht, den Stecker als zylindrisches Gehäuseteil auszubilden. Nachteilig dabei ist, daß das daran anzuschließende Kabel nur radial angeschlossen werden kann. Die Handhabung wird erschwert, wenn die zu montierende Winkelmeßeinrichtung am Einbauort radial nicht zugänglich ist. Bei nicht angeschlossenem Kabel liegen die Kontakte des Steckers frei.

Aus der DE-A-43 04 032 - von der diese Erfindung ausgeht - ist eine Winkelmeßeinrichtung bekannt, bei der die Steckverbindung innerhalb des Gehäuses der Meßeinrichtung angeordnet ist. Um diese Steckverbindung zugänglich zu machen, ist am Gehäuse eine segmentförmige Aussparung vorgesehen, die durch eine schwenkbare Haube abdeckbar ist. Die Haube bildet in der Abdeckstellung eine mechanische Zugentlastung für das von der Steckverbindung nach außen führende Anschlußkabel.

Ein Nachteil dieser Winkelmeßeinrichtung besteht darin, daß die Zugentlastung ausschließlich im geschlossenen Zustand der Haube wirksam ist, und daß die Zugentlastung durch die Verriegelung der Haube gebildet wird. Dadurch besteht die Gefahr, daß bei auftretender Zugkraft am Anschlußkabel sich die Haube öffnet. Ein weiterer Nachteil dieser Winkelmeßeinrichtung ist, daß das Anschlußkabel direkt am Außenumfang des Gehäuses geklemmt ist und dadurch die Richtung des wegführenden Anschlußkabels fest vorgegeben ist. Diese Richtung kann nur dadurch geändert werden, indem das Anschlußkabel außerhalb des Gehäuses gebogen wird, wozu ein freier Raum zur Verfügung stehen muß.

Der Erfindung liegt die Aufgabe zugrunde, eine Winkelmeßeinrichtung zu schaffen, die kompakt aufgebaut und flexibel einsetzbar ist.

Diese Aufgabe wird von einer Winkelmeßeinrichtung mit den Merkmalen des Anspruches 1 gelöst.

Vorteilhafte Ausgestaltungen entnimmt man den abhängigen Ansprüchen.

Die Vorteile der erfindungsgemäß ausgebildeten Winkelmeßeinrichtung bestehen darin, daß die Meßeinrichtung einfach aufgebaut ist und ein einfacher und flexibler Einbau gewährleistet ist, indem die Richtung des Kabelausgangs beliebig gewählt werden kann, ohne daß der Einbauraum größer als die Außenkontur der Meßeinrichtung selbst sein muß. Ein weiterer Vorteil ist, daß das Anschlußkabel vom Hersteller oder vom Anwender der Meßeinrichtung einfach montiert oder ausgewechselt werden kann, und daß die Zugentlastung unabhängig von einer verschließbaren Haube wirksam ist. Weiterhin bildet das Gehäuse der Winkelmeßeinrichtung eine Abschirmung gegenüber äußere elektromagnetische Felder.

Anhand der Zeichnungen wird die Erfindung näher erläutert.

Es zeigt
- Figur 1: eine Winkelmeßeinrichtung im Querschnitt längs der Wellenachse und

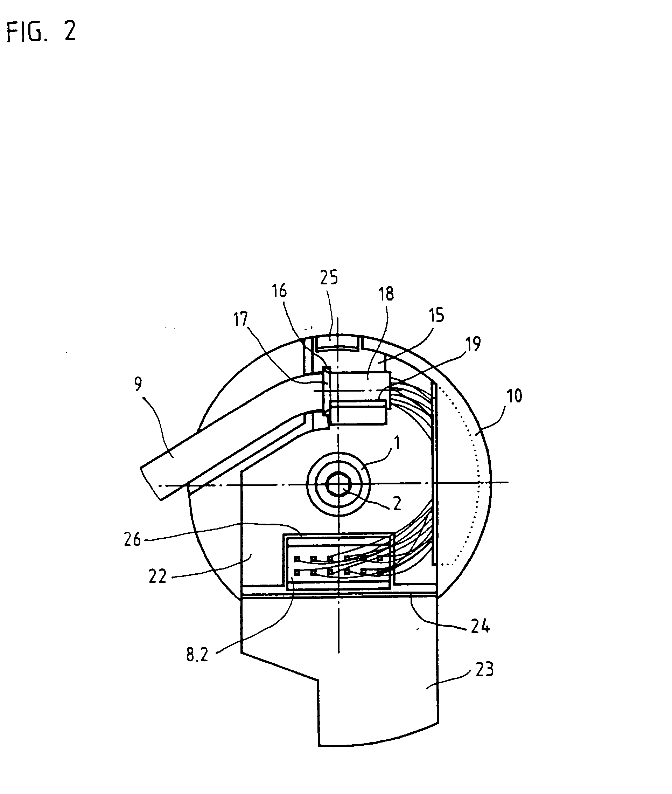

- Figur 2: eine Draufsicht auf diese Winkelmeßeinrichtung.

Die in den Figuren dargestellte Winkelmeßeinrichtung weist eine Welle 1 zum Anschluß an einen zu messenden Körper auf. Die Verbindung zwischen der Welle 1 und dem zu messenden Körper wird beispielsweise mit einem durch die Welle 1 ragenden Verbindungselement in Form einer Schraube 2 realisiert.

Die Winkelmeßeinrichtung selbst wird über einen Grundkörper 3 an einem weiteren Körper befestigt. Der zu messende Körper ist beispielsweise eine Motorwelle und der weitere Körper das stationäre Motorgehäuse.

In bekannter Weise ist die Welle 1 im Grundkörper 3 drehbar gelagert, wobei an der Welle 1 eine Codescheibe 4 befestigt ist und/oder die Welle 1 über ein Getriebe eine oder mehrere Codescheiben antreibt. Die Codescheibe 4 wird im gezeigten Beispiel lichtelektrisch von einer Abtasteinrichtung 5 abgetastet. Da die Codescheibe 4 im Durchlichtverfahren abgetastet wird, ist hierzu eine Lichtquelle 5.1 im Grundkörper 3 auf einer Seite der Codescheibe 4 und ein Detektor 5.2 auf der anderen Seite der Codescheibe 4 angeordnet. Der Detektor 5.2 befindet sich auf einer Leiterplatte 6 und zwar auf der Seite, die der Codescheibe 4 zugewandt ist. Auf der anderen Seite der Leiterplatte 6 sind elektrische Bauelemente 7 zur Signalformung - beispielsweise Verstärkung und Digitalisierung - der vom Detektor 5.2 gelieferten Abtastsignale angeordnet. Auf der Leiterplatte 6 befindet sich weiterhin ein Teil 8.1 einer Steckverbindung 8. Das korrespondierende Teil 8.2 dieser Steckverbindung 8 ist an einem nach außen führenden Anschlußkabel 9 befestigt.

Zum Schutz der Winkelmeßeinrichtung ist ein topfförmiges Gehäuse 10 vorgesehen, welches über den Umfang klemmend am Grundkörper 3 befestigt ist. Im dargestellten Beispiel ist diese Verbindung eine Ringschnappverbindung, bei der im Grundkörper 3 eine Nut 11 und am Gehäuse 10 ein korrespondierender Vorsprung 12 vorgesehen ist.

Mit dem Gehäuse 10 wird die Leiterplatte 6 axial an eine Fläche 13 des Grundkörpers 3 gedrückt. Hierzu weist das Gehäuse 10 einen ringförmigen Absatz 14 auf.

Das Gehäuse 10 weist in seinem Innenraum eine Vorrichtung 15 zur Zugentlastung des Anschlußkabels 9 auf. Diese Vorrichtung 15 ist integraler Bestandteil des Gehäuses 10 und besteht aus einer Ringnut 16, in die ein Vorsprung 17 eines mit dem Anschlußkabel 9 fest verbundenen Teiles 18 eingreift, wodurch ein Formschluß zwischen dem Gehäuse 10 und dem Anschlußkabel 9 bzw. dem Teil 18 entsteht. Eine am Anschlußkabel 9 außerhalb der Winkelmeßeinrichtung angreifende Zugkraft wird dadurch nicht auf die Steckverbindung 8 übertragen.

Das am Anschlußkabel 9 befestigte Teil 18 ist vorzugsweise eine Crimphülse, die eine Verdickung 16 aufweist. Diese Crimphülse 18 ist elektrisch leitend und ist zur sicheren und einfachen Befestigung in einer Passung 19 des Gehäuses 10 geklemmt. Diese Passung 19 ist an die Form der Hülse 18 angepaßt und umgreift diese nach dem Einschnappen teilweise. Die Crimphülse 18 stellt somit eine elektrische Verbindung zwischen dem Schirm des Anschlußkabels 9 und dem Gehäuse 10 her. Das Gehäuse 10 ist dadurch mittels des Anschlußkabels 9 auf einfache Weise mit dem Bezugspotential einer Folgeelektronik (Zähler, Steuerung) verbindbar. Das Gehäuse 10 ist beispielsweise aus einem elektrisch leitenden Kunststoff oder aus einem elektrisch leitend beschichteten Kunststoff hergestellt - insbesondere ein Spritzgußteil. Die Passung 19 und die Ringnut 16 sind derart im Gehäuse 10 angeordnet, daß das Anschlußkabel 9 im Passungsbereich zumindest annähernd senkrecht zur Längsachse X der Winkelmeßrichtung verläuft.

Zur vollständigen Abschirmung der Bauelemente 7 vor elektromagnetischen Feldern weist das Gehäuse 10 eine Hülse 20 auf. Diese Hülse 20 ist so ausgebildet, daß sie mit einer elektrisch leitenden Fläche 21 der Leiterplatte 6 elektrischen Kontakt hat. Die Leiterplatte 6 weist beispielsweise einen leitenden Ring 21 auf. Die Hülse 20 schützt auch die Leiterplatte 6 und die Bauelemente 7 vor mechanischer Beschädigung.

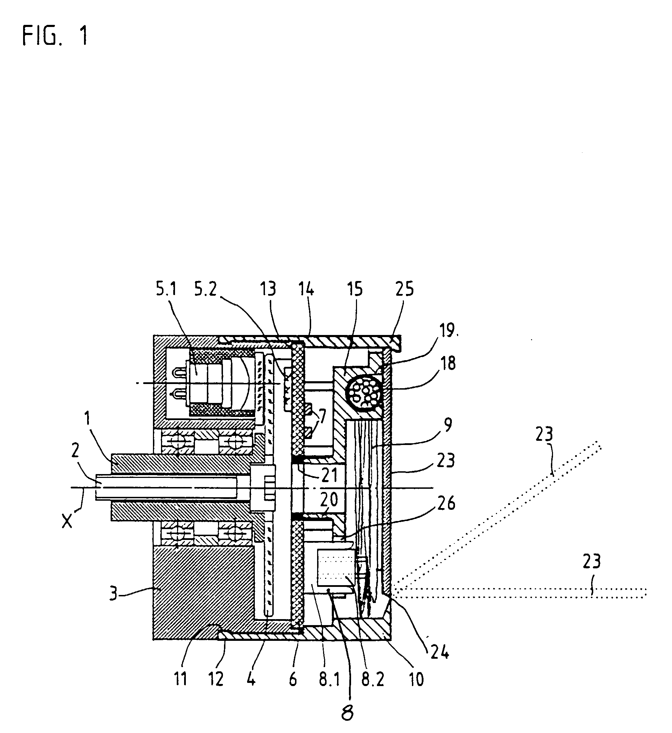

Zum einfachen Anschluß und Auswechseln des Anschlußkabels 9 ist an einem axialen Ende des Gehäuses 10 eine verschließbare Öffnung 22 vorgesehen. Diese Öffnung 22 ist mit einem aufklappbaren Deckel 23 verschließbar. Der Deckel 23 ist im Beispiel integraler Bestandteile des Gehäuses 10 und über ein Filmscharnier 24 auf- und zuklappbar. Im zugeklappten Zustand wird der Deckel 23 von einem Verriegelungshaken 25 des Gehäuses 10 gehalten, so daß die Winkelmeßeinrichtung allseitig zumindest staubdicht verschlossen und gegen elektromagnetische Felder abgeschirmt ist. In der aufgeklappten Stellung des Deckels 23 - in Figur 1 gestrichelt dargestellt - kann der Hersteller der Winkelmeßeinrichtung sowie der Anwender das Anschlußkabel 9 an das Teil 8.1 der Steckverbindung anschließen und das Anschlußkabel 9 in die Vorrichtung 15 zur Zugentlastung einlegen. Das Gehäuse 10 ist so ausgebildet, daß ausschließlich das Steckverbindungsteil 8.1 über eine Gehäuseöffnung 26 bei geöffnetem Deckel 23 von außen zugänglich ist. Die weiteren Bauelemente 7 auf der Leiterplatte 6 sowie die Leiterplatte 6 selbst sind auch im geöffneten Zustand des Deckels 23 vom Gehäuse 10 abgedeckt.

Um eine einfache Montage der Welle 1 der Winkelmeßeinrichtung an eine zu messende Welle zu gewährleisten, ist die Schraube 2 ebenfalls bei geöffnetem Deckel 23 zugänglich. Die Hülse 20 verhindert eine Beschädigung der Leiterplatte 6 und der Bauelemente 7, wenn der Anwender die Schraube 2 mit einem Werkzeug von der Öffnung 22 her betätigt.

Die Vorrichtung 15 zur Zugentlastung ist vollständig innerhalb der radialen Außenkontur des Gehäuses 10 mit Abstand zur radialen Außenkontur des Grundkörpers 3 und Gehäuses 10 angeordnet. Dies hat den Vorteil, daß das Anschlußkabel 9 innerhalb eines Bereiches der Winkelmeßeinrichtung selbst von der Vorrichtung 15 bis zur Außenkontur beliebig gebogen werden kann. Dadurch kann ein beliebig radialer oder auch axialer Kabelausgang gewählt werden. Die Fixierung des Anschlußkabels 9 für die Zugentlastung muß von der Außenkontur des Gehäuses 10 zumindest entsprechend dem minimal zulässigen Biegeradius des Anschlußkabels 9 beabstandet sein. Besonders vorteilhaft ist es, wenn die Vorrichtung 15 zur Zugentlastung - also die Mittel zur Fixierung des Anschlußkabels 9 am Gehäuse 10 - innerhalb der von außen zugänglichen und verschließbaren Gehäuseöffnung 26 angeordnet sind.

Zusammenfassend hat die erfindungsgemäß ausgebildete Winkelmeßeinrichtung folgende Vorteile:
- flexibler Kabelausgang bei kleiner Baugröße;
- kostengünstige Herstellung, da einstückiges Gehäuse 10 mit Deckel 23;
- vollständiger Berührungsschutz der Leiterplatte 6 auch während des Kabelanschlusses;
- sichere Zugentlastung 15 und gute elektrische Verbindung des Anschlußkabels 9 mit dem Gehäuse 10;
- kein Spezialwerkzeug zum Öffnen und Schließen des Deckels 23 erforderlich;
- Zusatzfunktionen wie zum Beispiel Klemmung der Leiterplatte 6 in Gehäuse 10 integriert;
- sichere Zugentlastung unabhängig von der Stellung des Deckels 23 gewährleistet.

## Patentansprüche

1. Winkelmeßeinrichtung mit einem Gehäuse (10) mit radialer Außenkontur, das eine mit einem Deckel (23) verschließbare Öffnung (22) aufweist und innerhalb des Gehäuses (10) eine Steckverbindung (8) zum elektrischen Anschluß eines Kabels (9) vorgesehen ist, die von der verschließbaren Öffnung (22) her zugänglich ist, dadurch gekennzeichnet, daß
- innerhalb der radialen Außenkontur des Gehäuses (10) eine Vorrichtung (15) zur Zugentlastung dieses Kabels (9) angeordnet ist, welche bei geöffnetem Deckel (23) von der Öffnung (22) her zugänglich ist,
- die Vorrichtung (15) eine Passung (19) aufweist, in welche ein Bereich des Kabels (9) eingreift und dadurch unabhängig von der Stellung des Deckels (23) das Kabel (9) fixiert und als Zugentlastung wirksam ist,
- das Kabel (9) am Gehäuse (10) von der radialen Außenkontur um mindestens den minimal zulässigen Biegeradius des Kabels (9) beabstandet fixiert ist, um durch Biegung des Kabels (9) innerhalb der Außenkontur einen flexiblen radialen oder axialen Kabelausgang wählen zu können.

2. Winkelmeßeinrichtung nach Anspruch 1, dadurch gekennzeichnet, daß die Vorrichtung (15) zur Zugentlastung integraler und angeformter Bestandteil des Gehäuses (10) ist.

3. Winkelmeßeinrichtung nach einem der vorhergehenden Ansprüche, dadurch gekennzeichnet, daß über die verschließbare Öffnung (22) ein Verbindungselement (2) der Winkelmeßeinrichtung zugänglich und betätigbar ist, wobei mit dem Verbindungselement (2) eine eine Codescheibe (4) tragende Welle (1) der Winkelmeßeinrichtung mit einem zu messenden Körper verbindbar ist.

4. Winkelmeßeinrichtung nach einem der vorhergehenden Ansprüche, dadurch gekennzeichnet, daß
- das Gehäuse (10) elektrisch leitend ausgebildet ist,
- der mit der Passung (19) in Eingriff befindliche Bereich des Kabels (9) eine elektrisch leitende Hülse (18) aufweist, welche mit dem Gehäuse (10) in elektrischen Kontakt steht,
- die Hülse (18) mit einer elektrischen Leitung, insbesondere dem Schirm des Kabels (9) elektrisch verbunden ist.

5. Winkelmeßeinrichtung nach Anspruch 4, dadurch gekennzeichnet, daß die Hülse (18) einen Vorsprung (17) aufweist, der in eine Ringnut (16) der Vorrichtung (15) formschlüssig eingreift, wobei die Ringnut (16) quer zum Verlauf des Kabels (9) ausgerichtet ist.

6. Winkelmeßeinrichtung nach einem der vorhergehenden Ansprüche, dadurch gekennzeichnet, daß das Kabel (9) in der Vorrichtung (15) zur Zugentlastung senkrecht zur Längsachse (X) der Winkelmeßeinrichtung verlaufend angeordnet ist.

7. Winkelmeßeinrichtung nach einem der vorhergehenden Ansprüche, dadurch gekennzeichnet, daß die Winkelmeßeinrichtung zumindest eine Leiterplatte (6) mit elektrischen Bauelementen (7) enthält, und daß diese Bauelemente (7) innerhalb eines Raumes angeordnet sind, der von dem Gehäuse (10) umgeben wird, und daß das Gehäuse (10) Abdeckbereiche (20) aufweist, welche die elektrischen Bauelemente (7) auch bei geöffnetem Deckel (23) umschließen bzw. abdecken, wobei in diese Abdeckbereiche (20) die Vorrichtung (15) zur Zugentlastung integriert ist.

8. Winkelmeßeinrichtung nach Anspruch 7, dadurch gekennzeichnet, daß auf der Leiterplatte (6) das Teil (8.1) der Steckverbindung angeordnet ist, und daß der Öffnung (22) eine in den Abdeckbereichen (20) eingebrachte weitere Öffnung (26) nachgeordnet ist, durch die bei geöffnetem Deckel (23) das Teil (8.1) der Steckverbindung zugänglich ist bzw. durch die das Teil (8.1) der Steckverbindung greift.

9. Winkelmeßeinrichtung nach Anspruch 7, dadurch gekennzeichnet, daß das Gehäuse (10) elektrisch leitend ist und mit einem elektrisch leitenden Oberflächenbereich (21) der Leiterplatte (6) in mechanischen und elektrischen Kontakt steht.

## Claims

1. Angle measuring device having a housing (10) with a radial outer contour, said housing having an opening (22), which can be closed with a cover (23), and within the housing (10) a plug-in connection (8) is provided for the electrical connection of a cable (9) which plug-in connection is accessible from the closeable opening (22),
characterised in that
- within the radial outer contour of the housing (10) a device (15) is arranged for the strain relief of this cable (9), which device is accessible from the opening (22) when the cover (23) is opened,
- the device (15) has a fitting (19) into which a region of the cable (9) engages and, as a result, fixes the cable (9) independently of the position of the cover (23) and is effective as strain relief,
- the cable (9) on the housing (10) is fixed at a spacing from the radial outer contour by at least the minimally permissible bending radius of the cable (9) in order to be able to select a flexible, radial or axial cable outlet by means of bending the cable (9) within the outer contour.

2. Angle measuring device according to claim 1, characterised in that the device (15) for the strain relief is an integral and moulded-on component of the housing (10).

3. Angle measuring device according to one of the preceding claims, characterised in that via the closeable opening (22) a connection element (2) of the angle measuring device is accessible and actuable, a code slice (4)-bearing shaft (1) of the angle measuring device with a body to be measured being connectable to the connection element (2).

4. Angle measuring device according to one of the preceding claims, characterised in that
- the housing (10) is configured to be electrically conductive,
- the region of the cable (9) which is in engagement with the fitting (9) has an electrically conductive sleeve (18) which is in electrical contact with the housing (10),
- the sleeve (18) is connected electrically to an electric circuit, especially the sheath of the cable (9).

5. Angle measuring device according to claim 4, characterised in that the sleeve (18) has a projection (17) which engages into an annular groove (16) of the device (15) in a positive fit, the annular groove (16) being aligned transversely relative to the course of the cable (9).

6. Angle measuring device according to one of the preceding claims, characterised in that the cable (9) in the device (15) for strain relief is arranged extending perpendicularly to the longitudinal axis (X) of the angle measuring device.

7. Angle measuring device according to one of the preceding claims, characterised in that the angle measuring device contains at least one printed circuit board (6) with electrical components (7), and in that these components (7) are arranged within a space which is surrounded by the housing (10) and in that the housing (10) has covered regions (20) which encompass or cover the electrical components (7) even when the cover (23) is opened, the device (15) for strain relief being integral with these covered regions (20).

8. Angle measuring device according to claim 7, characterised in that the part (8.1) of the plug-in connection is arranged on the printed circuit board (6) and in that a further opening (26) which is provided in the covered regions (20) is assigned to the opening (22) through which opening (26) the part (8.1) of the plug-in connection is accessible or through which the part (8.1) of the plug-in connection grips when the cover (23) is opened.

9. Angle measuring device according to claim 7, characterised in that the housing (10) is electrically conductive and is in mechanical and electrical contact with an electrically conductive surface region (21) of the printed circuit board (6).

## Revendications

1. Dispositif de mesure d'angles comportant un boîtier (10) avec un profil extérieur radial, qui présente une ouverture (22) obturable par un couvercle (23) et, à l'intérieur du boîtier (10), une connexion à enfichage (8) pour la connexion électrique d'un câble (9) qui est accessible depuis l'ouverture (22) obturable, caractérisé par le fait que
- à l'intérieur du profil extérieur radial du boîtier (10) est disposé un dispositif (15) pour soulager la traction du câble (9), qui est accessible depuis l'ouverture (22), lorsque le couvercle (23) est ouvert,
- le dispositif (15) comporte un ajustement (19) dans lequel une partie du câble (9) s'engage et ainsi, indépendamment de la position du couvercle (23), tient le câble (9) et agit en dispositif de soulagement de la traction,
- le câble (9) est fixé au boîtier (10) à une distance du profil extérieur radial qui est au moins égale au rayon de courbure minimal admissible du câble (9), aux fins de pouvoir choisir par flexion du câble (9) à l'intérieur du profil extérieur une sortie de câble souple radiale ou axiale.

2. Dispositif de mesure d'angles selon la revendication 1, caractérisé par le fait que le dispositif (15) pour soulager la traction fait partie intégrante du boîtier (10) ou est rapporté par moulage sur celui-ci.

3. Dispositif de mesure d'angles selon une des revendications précédentes, caractérisé par le fait qu'un élément de liaison (2) du dispositif de mesure d'angles est accessible et peut être actionné à travers l'ouverture obturable (22), un arbre (1) du dispositif de mesure d'angles qui porte un disque codeur (4) pouvant être lié à un corps à mesurer à l'aide de l'élément de liaison (2).

4. Dispositif de mesure d'angles selon une des revendications précédentes, caractérisé par le fait que
- le boîtier (10) est électro-conducteur,
- la partie du câble (9) qui est en prise avec l'ajustement (19) comporte un manchon électro-conducteur (18) qui est en contact électrique avec le boîtier (10),
- le manchon (18) est relié électriquement à une conduite électrique, en particulier au blindage du câble (9).

5. Dispositif de mesure d'angles selon la revendication 4, caractérisé par le fait que le manchon (18) comporte une saillie (17) qui pénètre par complémentarité de formes dans une rainure annulaire (16) du dispositif (15), la rainure annulaire (16) étant agencée transversalement à la direction du câble (9).

6. Dispositif de mesure d'angles selon une des revendications précédentes, caractérisé par le fait que le câble (9), dans le dispositif (15) pour le soulagement de la traction, s'étend perpendiculairement à l'axe longitudinal (X) du dispositif de mesure d'angles.

7. Dispositif de mesure d'angles selon une des revendications précédentes, caractérisé par le fait que le dispositif de mesure d'angles comprend au moins une carte à circuit imprimé (6) avec des composants électriques (7), par le fait que ces composants électriques (7) sont disposés à l'intérieur d'une chambre qui est entourée par le boîtier (10) et par le fait que le boîtier (10) présente des parties de protection (20) qui entourent ou couvrent les composants électriques (7), même lorsque le couvercle (23) est ouvert, le dispositif pour le soulagement de la traction (15) étant intégré dans ces parties de protection (20).

8. Dispositif de mesure d'angles selon la revendication 7, caractérisé par le fait que l'élément (8.1) du dispositif à enfichage est disposé sur la carte à circuit imprimé (6) et par le fait qu'une ouverture supplémentaire (26) aménagée dans les parties de protection (20) est disposée derrière l'ouverture (22), ouverture à travers laquelle l'élément (8.1) de la connexion à enfichage est accessible et passe, lorsque le couvercle (23) est ouvert.

9. Dispositif de mesure d'angles selon la revendication 7, caractérisé par le fait que le boîtier (10) est électro-conducteur et est en contact mécanique et électrique avec une partie de surface (21) électro-conductrice de la carte à circuit imprimé (6).
